# EUROPEAN PATENT SPECIFICATION

(11) **EP 0 785 115 B1**
(45) Date of publication and mention of the grant of the patent: **24.10.2001**
(21) Application number: 97300223.1
(22) Date of filing: 15.01.1997
(51) Int. Cl.: B60S 1/34

(54) **Improvements relating to wiper arm assemblies**
Scheibenwischerarm
Bras d'essuie-glace

(30) Priority: 20.01.1996 GB 9601192
(43) Date of publication of application: 23.07.1997
(73) Proprietor: TRICO PRODUCTS CORPORATION, Buffalo, NY 14203-1298 (US)
(72) Inventor: Robertson, Alistair Duncan, Aberdare, Mid Galamorgan, CF44 6RP (GB); Rees, David Alwyn, Treharris, Mid Glamorgan, CF46 5NR (GB); Cleveland, Allen John, Abergavenny, Gwent, NP7 9PA (GB)
(74) Representative: James, Michael John Gwynne

(56) References cited:
- DE-A- 3 517 575
- FR-A- 2 099 853

## Description

A wiper arm assembly forms a linkage between the drive motor and the wiper blade of a windscreen wiper and conventionally comprises two parts, namely a retainer and an armpiece. In the final construction of such a wiper arm assembly it is required that the end of the armpiece should be securely held within the retainer. The tip of the armpiece often provides a mounting for a compression spring which holds the wiper arm down onto the windscreen. Consequently there is a force (provided by the spring) tending to pull the armpiece further into the retainer. Secure fixing of the armpiece is therefore very important.

A wiper arm assembly of FR-A-2099853 comprises an arm piece and a retainer, the retainer having side portions which are swaged over one end of the arm piece, a depression is formed in part of said one end of the arm piece below the swaged over side portions of the retainer and a punched distortion of the material of the side portions into the recess in the arm piece holds the arm piece firmly within the retainer, the material of the side portions has been driven into a depression recess or hole to cause a partial shear of the material of the retainer.

In accordance with the present invention, in a wiper arm assembly of this type, regions of the facing terminal edges of the side portions mutually overlap with one another in the longitudinal direction of the wiper arm assembly, and parts of the side portions which are to be distorted by a punch have been precut to facilitate punching, these precut parts being shaped to overlap one another in the longitudinal direction.

The punched distortion of the retainer material into the depression, recess or hole in the armpiece holds the two parts together in a fixed condition even against a force provided by the retaining spring.

It may be preferred that the shape of the punched distortion of the material of the retainer corresponds to the shape of said depression, recess or hole. It is possible, however, to have a small depression, recess or hole in the armpiece whilst a wide bladed but pointed punch is used to drive the material of the retainer down towards the depression, recess or hole so that only the parts of the retainer material near to the point of the punch are driven into the depression, recess or hole.

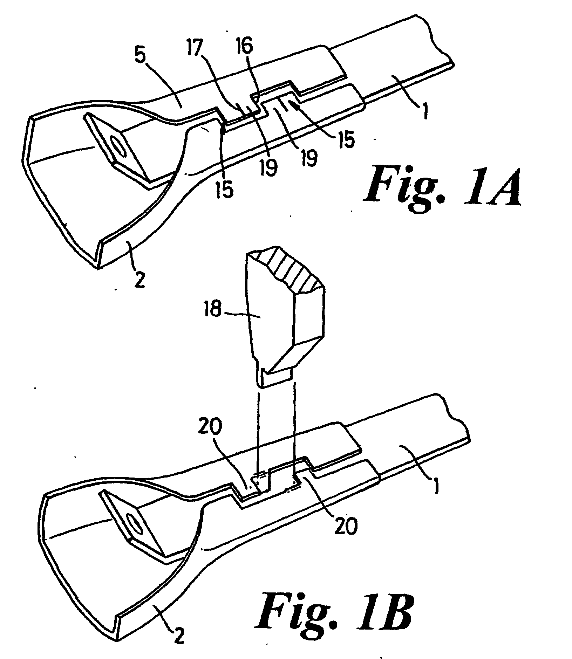

The invention may be performed in various ways and a preferred embodiment thereof will now be described, by way of example, with reference to the accompanying drawings, in which:-
Figures 1A and 1B illustrate the formation stages of a wiper arm assembly in accordance with the invention.

The retainer 2 shown in the drawings has side portions 5 (which are swaged over the armpiece 1) of a special form. These have mutually overlapping parts 15 projecting into recesses 16. Each of the parts 15 has a central cut 17 so that when, as shown in Figure 1B, a punch 18 is driven onto the segments 19 of the parts 15 these segments only will driven downwardly into a recess in the armpiece 1. The remaining segments 20 provide a degree of interlocking of the side portions 5.

## Claims

1. A wiper arm assembly comprising an armpiece (1) and a retainer (2), the retainer having side portions which are swaged over one end of the armpiece, a depression, recess or hole (16) formed in part of said one end of the armpiece underneath the terminal edges of the swaged over side portions (5) of the retainer and a punched distortion of the material of the terminal edges of the side portions into the depression, recess or hole in the armpiece to hold the armpiece firmly within the retainer, wherein the material of the side portions has been driven into said depression, recess or hole to cause a partial shear of the material of the retainer, **characterised in that** regions (15) of the facing terminal edges of the side portions mutually overlap with one another in the longitudinal direction of the wiper arm assembly and parts (19) of the side portions which are to be distorted by a punch have been precut to facilitate punching, these precut parts being shaped to overlap one another in the longitudinal direction.

2. A wiper arm assembly according to Claim 1, wherein the shape of the punched distortion of the material of the retainer corresponds to the shape of said depression, recess or hole.

## Patentansprüche

1. Wischerarmanordnung mit einem Armteil (1) und einem Halter (2), welcher Seitenabschnitte aufweist, die über ein Ende des Armteils gesenkgeschmiedet sind, wobei die Wischerarmanordnung folgendes aufweist, eine Vertiefung, Ausnehmung oder ein Loch (16) in einem Teil dieses Endes des Armteils unterhalb der Endkanten der gesenkgeschmiedeten Seitenabschnitte (5) des Halters und eine gestanzte Verformung des Werkstoffes der Endkanten der Seitenabschnitte in die Vertiefung, Ausnehmung oder das Loch in dem Armteil hinein zum Halten des Armteils innerhalb des Halters, wobei der Werkstoff der Seitenabschnitte in die Vertiefung, Ausnehmung oder das Loch gedrückt ist, um eine teilweise Scherung des Werkstoffes des Halters zu bewirken,
**dadurch gekennzeichnet**
**daß** Bereiche der einander zugewandten Endkanten der Seitenabschnitte gegenseitig in Längsrichtung der Wischerarmanordnung überlappen und Teile (19) der Seitenabschnitte, welche durch eine Stanzung verformt werden sollen, zum Unterstützen der Stanzung vorgeschnitten sind, wobei diese vorgeschnittenen Teile derart ausgeformt sind, daß sie in Längsrichtung überlappen.

2. Wischerarmanordnung nach Anspruch 1, **dadurch gekennzeichnet, daß** die Form der gestanzten Verformung des Werkstoffes des Halters der Form der Vertiefung, der Ausnehmung oder dem Loch entspricht.

## Revendications

1. Ensemble de bras d'essuie-glace comprenant un élément de bras (1) et un système de fixation (2), le système de fixation ayant des parties latérales qui sont repliées par matriçage sur l'une des extrémités de l'élément de bras, une dépression, cavité ou trou (16) formé dans une partie de ladite extrémité précitée de l'élément de bras au-dessous des bordures terminales des parties latérales (5) repliées par matriçage du système de fixation et une distorsion poinçonnée du matériau des bordures terminales des parties latérales dans la dépression, cavité ou trou dans l'élément de bras pour maintenir l'élément de bras fermement à l'intérieur du système de fixation, dans lequel le matériau des parties latérales a été enfoncé dans ladite dépression, cavité ou trou afin de provoquer un cisaillement partiel du matériau du système de fixation, **caractérisé par le fait que** des régions (15) des bordures terminales en regard des parties latérales s'imbriquent mutuellement dans la direction longitudinale de l'ensemble de bras d'essuie-glace et des parties (19) des parties latérales qui doivent subir une distorsion par un poinçon ont été prédécoupées afin de faciliter le poinçonnage, ces parties prédécoupées étant façonnées pour s'imbriquer dans la direction longitudinale.

2. Ensemble de bras d'essuie-glace selon la revendication 1, dans lequel la forme de la distorsion poinçonnée du matériau du système de fixation correspond à la forme de ladite dépression, cavité ou trou.
